# EUROPÄISCHE PATENTSCHRIFT

(11) **EP 2 071 200 B1**
(45) Veröffentlichungstag und Bekanntmachung des Hinweises auf die Patenterteilung: **31.08.2011**
(21) Anmeldenummer: 07024047.8
(22) Anmeldetag: 12.12.2007
(51) Int. Cl.: F16B 21/18, E04F 13/08

(54) **Abstandhalter für die Befestigung von Paneelen und dergleichen**
Spacer for fastening panels and similar objects
Entretoise pour la fixation de panneaux et analogues

(43) Veröffentlichungstag der Anmeldung: 17.06.2009
(73) Patentinhaber: Kunstdünger SRL, 39012 Merano (BZ) (IT)
(72) Erfinder: Linter, Albert, 39012 Merano (BZ) (IT)
(74) Vertreter: Oberosler, Ludwig

(56) Entgegenhaltungen:
- WO-A-2006/099734
- DE-B- 1 187 070
- FR-A- 2 887 310

## Beschreibung

Aus der IT 00246284 der selben Antragstellerin sind Abstandhalter bekannt welche, z.B. an einer Wand, zwecks Befestigung von Glasscheiben, von Scheiben aus Metall oder aus anderem Werkstoff, als Träger von Mitteilungsbögen und/oder von Werbeblätter anbringbar sind.

Die besagten Abstandhalter halten die Scheiben oder Paneele von der Wand beabstandet und ermöglichen auch die Anpassung an unterschiedliche Scheiben-oder Paneelstärken. Die bekannten Abstandhalter dieser oder ähnlicher Art bestehen allgemein aus einer an der Wand befestigten Buchse und aus einem Bolzen mit vorstehendem Kopf, wobei dieser Bolzen axial innerhalb der Buchse gleiten kann und durch eine Madenschraube welche radial in eine umlaufende Rille am Bolzenschaft eingreift, arretierbar ist. Der Abstand der genannten Rille zum vorstehenden Kopf am Bolzenende, minus den Abstand zwischen der Position der radialen Arretierschraube und dem Ende der Buchse, bestimmt die Stärke der Scheibe welche zwischen dem Bolzenkopf und der Buchse eingesetzt werden kann. In der IT 00246284 ist am Schaft des Bolzens mit vorstehendem Kopf keine umlaufende Rille zwecks Anpassung der axialen Position des Bolzens an die Stärke der Scheibe oder des Paneels vorgesehen. Um das vollständige Ausziehen des Bolzens mit Rückhaltekopf zu verhindern ist der Bolzen am entgegengesetzten Ende mit einem vorstehenden Kragen versehen welcher, im Falle der Lockerung der Arretierschraube, das vollständige Ausziehen des Bolzens aus der Buchse verhindert.

Es ist weiters ein System zur Halterung mittels Abstandhalter bekannt bei welchem die Befestigung der Scheibe oder des Paneels durch Aufschrauben eines Kopfes am Ende eines, mit einer axial aufgesteckten Abstandsbuchse versehenen, an der Wand angebrachten Bolzens, erfolgt. Auch dieses System ermöglicht nicht eine Anpassung an unterschiedliche Stärken der Scheiben oder der Paneele ohne Austausch der Bolzen, bzw. der Abstandsbuchsen.

Aus der FR 2887310 ist eine Vorrichtung für die Befestigung von Gegenständen wie Platten an einem anliegenden Halter bekannt. Der Halter besteht aus einer Buchse welche mit der Achse senkrecht zur Wand, z.B. mittels Schrauben und Dübel, befestigt ist. In diese Buchse ist eine entsprechende Muffe axial einsteckbar welche mittels Schraube am zu haltenden Plattenelement befestigt ist. Durch die Zwischenlage von Beilagscheiben ist es möglich den Abstand zwischen der hinteren Fläche des Plattenelementes und der Muffe zu verändern. Die Muffe weist an der zylindrischen Außenfläche mindestens eine Querschnittsverminderung (Rille) auf, welche bestimmt ist mit mindestens einem Vorsprung zusammenzuarbeiten welcher an der zylindrischen Innenfläche der Buchse vorgesehen ist. Dieser Vorsprung ist ein, in der Buchsenwand verdrehbares Nockenelement und/oder eine radial wirkende federbelastete Kugel.
Diese Vorrichtung weist den Nachteil auf, dass der Abstand zwischen der Stirnfläche der Buchse und der hinteren Fläche des Plattenelementes mittels Beilagscheiben verändert, angepasst oder angeglichen werden muss. Das Arretieren der Muffe innerhalb der Buchse durch ein verdrehbares Nockenelement und/oder durch eine radial angeordnete Schraube ist umständlich, die Arretierelemente sind von außen störend sichtbar, unter Umständen (bei montiertem Plattenelement) schwer zugänglich und aufwändig in der Herstellung.

Aus der DE 1187070 ist eine "Vorrichtung zum abstandregelbaren Verbinden, bzw. zum Verspannen von zwei oder mehreren rohrartigen Teilen" bekannt. Diese Vorrichtung welche insbesondere für die Verankerung von Deckenverkleidungen geeignet ist bietet die Möglichkeit einer Längsverstellung, auch unter Last, durch Verdrehen eines Gewindebolzens welcher koaxial in Rohrelemente eingesteckt ist, wobei die Rohrelemente wenigstens zwei, sich etwa gegenüberliegende, Schlitze aufweisen in welche Drahtbügel eingesetzt werden welche mit ihren zwei gegenüberliegenden Schenkeln in die Gewinderillen des Gewindebolzens eingreifen. Die Schenkel des Bügels übernehmen also im Innern des Rohrelementes die Funktion eines Innengewindes und der Innendurchmesser der (glatten) Innenwand der Rohrelemente, sowie die Form und der Durchmesser des Drahtbügels müssen so bemessen sein dass, unter Last (Zug oder Druck), die Schenkel des Bügels nicht elastisch gespreizt werden können, was ein Herausziehen des Gewindebolzens zur Folge hätte, dies geschieht dadurch dass sich die Schenkel, infolge einer relativ geringen Spreizung, an die Innenwand des Rohrelementes anlegen und somit eine weitere Spreizung verhindert wird. Derart geformte und eingesetzte Bügel ermöglichen weder ein axiales Verstellen eines mit Gewinde oder Rillen versehenen Bolzenschaftes, noch kann durch derartige Bügel auf den Bolzenschaft eine elastische Kraft in axiale Richtung ausgeübt werden um diesen elastisch in eine der axialen Richtungen zu drücken.

Keiner der bekannten Abstandhalter verfügt über ein schnelles Montage- und Anpassungssystem welches die sichere Halterung von Scheiben oder Paneelen mit unterschiedlicher Stärke, ohne Spiel und ohne Austausch von Teilen, ermöglicht.

Die Erfindung stellt sich die Aufgabe Abstandhalter der eingangs beschriebenen Art zu schaffen welche eine schnelle und einfache Montage der zu halternden Scheiben oder Paneele ermöglichen, wobei eine Anpassung der Teile des Abstandhalters an unterschiedliche Stärken der Scheiben oder Paneele gesichert wird, die Halterung ohne Anpass- oder Austauscharbeiten erfolgt und die sichere Halterung des Bolzens des Abstandhalters an der entsprechenden Buchse gesichert ist.

Zur Lösung dieser Aufgabe schlägt die Erfindung den Einsatz von Bolzen vor welche an ihrem Schaft eine Reihe umlaufender Rillen aufweisen in welche ein bügelförmiges elastisches Element eingreift welches an der Buchse angebracht ist und den Schaft des Bolzens zwischen seinen Schenkeln festhält. die umlaufenden Rillen am Bolzen können symmetrischen U-oder V-förmigen, quadratischen oder trapezförmigen oder unsymmetrischen Sägezähne-artigen Querschnitt aufweisen. Im Falle von Rillen mit symmetrischem Querschnitt muss der Bolzen zuerst durch die entsprechende Bohrung an der zu halternden Scheibe oder am Paneel geführt werden und anschließend in die Halterungsbuchse gesteckt werden, in einem folgenden Moment muss, indem auf den Bolzenkopf Druck ausgeübt wird der elastische Bügel radial an der Buchse aufgesteckt werden indem die beiden elastischen Schenkel in eigene entsprechende, die Buchsenwand durchbrechende, Schlitze eingeführt werden so dass sie in jene umlaufende Rille eingreifen welche in entsprechender Position am Bolzenschaft mit der Position der Schlitze übereinstimmt. Um ein eventuelles durch den gegenseitigen Abstand der Rillen am Bolzenschaft bewirktes Spiel zu verhindern, ist zwischen dem Bolzenkopf und der zu halternden Scheibe oder/und zwischen der besagten Scheibe und der Abstandsbuchse, ein ringförmiges elastisch verformbares Element eingesetzt welches ein eventuelles Spiel ausgleicht; dieses Element oder diese ringförmigen elastischen Elemente müssen während des Einsetzens des elastischen Bügels komprimiert werden indem auf den Bolzenkopf Druck ausgeübt wird.

Im Falle dass die umlaufenden Rillen am Schaft des Bolzens Sägezahn-förmig sind, sind diese so angeordnet dass der konische Teil zum Bolzenende gerichtet ist während die ebene Ringfläche zum Bolzenkopf gerichtet ist. Derartige Rillen ermöglichen das Einführen des Schaftes des Bolzens mit dem elastischen Bügel in Montagestellung an der Buchse, während der konische Teil die axiale Einführung begünstigt, verhindert die entsprechende ebene Ringfläche das Ausziehen des Bolzens indem sie an den Schenkeln des elastischen Bügels anliegt. Durch Druck auf den Kopf des Bolzens dessen Schaft Rillen mit Sägezahn-förmigem Querschnitt aufweist ist es möglich den Schaft in die Buchse einzudrücken, wobei der elastische Bügel in die progressiv vorbeibewegten Rillen einschnappt bis er in jene Rille eindringt welche der maximalen Eindringtiefe des Schaftes entspricht, welche durch die Stärke der Scheibe zwischen Bolzenkopf und Abstandsbuchse und durch das ringförmige oder die ringförmigen elastischen Elemente in komprimierter Stellung, welche zwecks Ausgleich des Spieles eingesetzt sind, definiert wird. Erfindungsgemäß können die elastischen Ausgleich-Ringelemente einfache Kunststoffscheiben, Gummischeiben oder bekannte elastische Beilagscheiben sein.

Gemäß einer Möglichkeit, die nicht Teil der Erfindung ist kann der Ausgleich des axialen Spieles mittels dem elastischen Bügel selbst erreicht werden, wobei dieser in diesem Fall elastische gebogene Schenkel aufweist welche in entsprechenden etwas breiteren Schlitzen an der Buchse gelagert sind. Der derartige Bügel wird eingesetzt nachdem der Bolzen vollständig eingeschoben worden ist und die gebogenen Schenkel des Bügels werden, beim Einschieben in den entsprechenden Schlitz an der Buchse und beim Eindringen in die Rille am Bolzenschaft, einer leichten Biegung unterzogen wodurch dieser in Richtung Boden der Buchse gezogen wird.

Die Erfindung umfasst weiters dass der Schaft des Bolzens zwei seitliche parallele Abflachungen aufweist so dass die Eingriffwirkung des an der Buchse angebrachten elastischen Bügels erreicht wird sobald die Rillen des eingeführten Schaftes des Bolzens sich in der, den Schenkeln des Bügels, entsprechenden Position befinden; durch Verdrehen des Bolzens um ca. 90° wird der Schaft ausgerastet weil die Abflachungen dem elastischen Bügel keinen Halt bieten; zwecks Erleichterung der Drehung des Bolzens, um die Einrast- oder die Ausklinkposition gegenüber dem elastischen Bügel zu erhalten, kann der Bolzenkopf Sitze (z.B. Sechskantsitz) zwecks Ansetzen von Werkzeugen aufweisen.

Die Erfindung wird anschließend anhand einiger, in den beigelegten Zeichnungen schematisch dargestellter, vorzuziehender Ausführungsbeispiele erfindungsgemäßer Abstandhalter für die Befestigung von Paneelen oder Scheiben, näher erklärt; dabei erfüllen die Zeichnungen rein erklärenden, nicht begrenzenden Zweck.

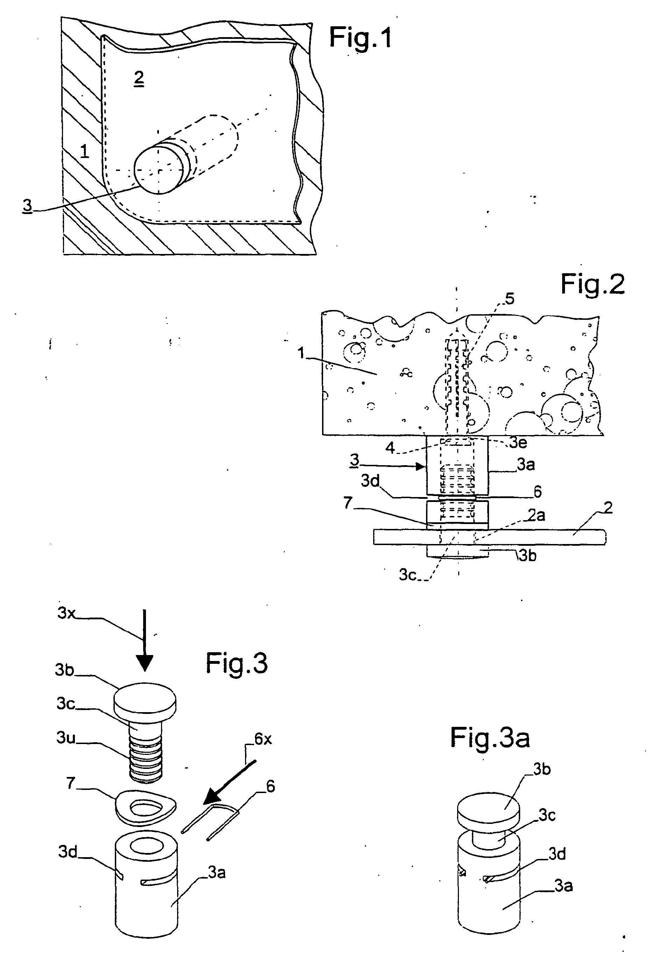

Die Fig. 1 zeigt in perspektivischer Darstellung den Eckteil einer Glasscheibe welche mittels erfindungsgemäßem Abstandhalter an einer Wand befestigt ist.

Die Fig. 2 zeigt den selben in Fig. 1 dargestellten Abstandhalter in Draufsicht mit der mittels Dübel an der Wand befestigten Abstandbuchse.

Die Fig. 3 zeigt die aufgelösten Einzelteile des in den Fig. 1 und 2 dargestellten Abstandhalters, ohne Dübel und Befestigungsschraube, in perspektivischer Darstellung, wobei der Schaft des Bolzens Rillen mit U-förmigem Querschnitt aufweist.

Die Fig. 3a zeigt den Abstandhalter gemäß Fig. 3 in zusammengebauter Stellung ohne elastische Beilagscheibe.

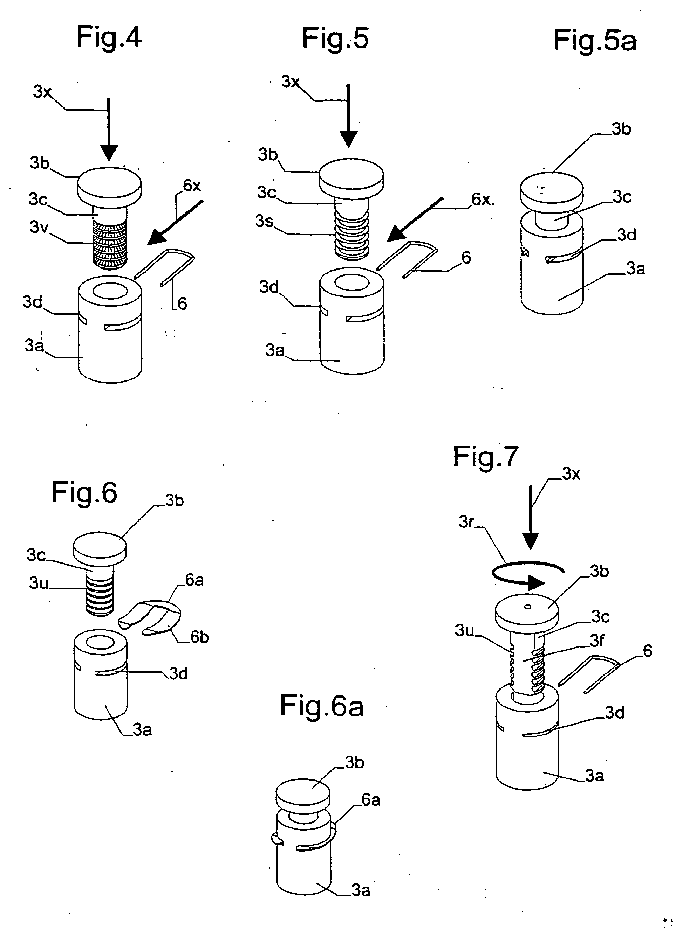

Die Fig. 4 zeigt die aufgelösten Einzelteile eines erfindungsgemäßen Abstandhalters mit Bolzenschaft mit Rillen mit v-förmigem Querschnitt in perspektivischer Darstellung ohne elastische Beilagscheibe

Die Fig. 5 zeigt die aufgelösten Einzelteile eines erfindungsgemäßen. Abstandhalters mit Bolzenschaft mit Rillen mit Sägezahn-förmigem Querschnitt ohne elastische Beilagscheibe

Die Fig. 5a zeigt den in den Fig. 4 oder 5 dargestellten Abstandhalter in zusammengebauter Position, ohne elastische Beilagscheibe

Die Fig. 6 zeigt die aufgelösten Einzelteile eines nicht-beanspruchten Abstandhalters mit Schaft mit Rillen mit U-förmigem Querschnitt in perspektivischer Darstellung, ohne elastische Beilagsscheibe und mit elastischem Bügel mit elastischen Ausgleichschenkeln.

Die Fig. 6a zeigt den in der Fig. 6 gezeigten Abstandhalter in montiertem Zustand.

Die Fig. 7 zeigt die aufgelösten Einzelteile eines erfindungsgemäßen Abstandhalters ohne elastische Beilagscheibe, dessen Bolzenschaft Rillen mit U-förmigem Querschnitt und zwei seitliche parallele Abflachungen aufweist.

Der Abstandhalter 3 für die Halterung von Scheiben oder Paneele 2 besteht erfindungsgemäß aus einer Buchse 3a mit Boden 3e, wobei dieser eine Bohrung für eine, mittels Dübel 5 an der Wand 1 eingesetzte, Befestigungsschraube 4 aufweist. Diese Buchse 3a weist seitliche, zueinander parallele Schlitze 3d auf welche in der selben Querschnittposition die Wand der Buchse durchqueren. In die Buchse 3a ist in axialer Richtung 3x ein Bolzen mit vorstehendem Kopf 3b und Schaft 3c eingesetzt, dieser weist eine Reihe umlaufender aneinander angrenzender Rillen auf welche U-förmigen Querschnitt 3u, V-förmigen Querschnitt 3v oder Sägezahn-förmigen Querschnitt 3s aufweisen. Die Schlitze 3d haben eine derartige Tiefe dass die Schenkel des elastischen Bügels 6 in montierter Stellung in die entsprechende Rille 3u, 3v, 3s einrasten und den Schaft des Bolzens in einer Position zurückhalten, in welcher der Kopf 3b an der zu halternden Scheibe 2 anliegt. Das durch den Abstand zwischen den Rillen 3u, 3v, 3s verursachte Spiel wird durch eine elastische Beilagescheibe 7 welche zwischen dem Kopf 3b und der Scheibe 2 oder/und zwischen der Scheibe 2 und der Buchse 3a eingesetzt ist, ausgeglichen. Im Falle von Rillen welche Sägezahn-förmigen Querschnitt 3s aufweisen sind die konischen Ringflächen zum Ende des Schaftes 3c, bzw. zum Boden 3e der Buchse 3a, ausgerichtet und mit der ebenen Ringfläche zum Bolzenkopf 3b ausgerichtet. Der Sägezahn-förmige Querschnitt 3s ermöglicht dass der Bolzen mit Schaft 3c mit montiertem Bügel 6 in die Buchse 3a eingesetzt werden kann indem auf den Kopf 3b ein Druck 3x ausgeübt wird bis das Spiel zwischen der Scheibe 2, der Hülse 3a und dem Kopf 3b vollständig eliminiert wird und die elastische Beilagscheibe 7 komprimiert wird. Wird der Bolzen anschließend nichtmehr angedrückt so wird ein eventuelles Spiel, welches sich aus der Position der Rille 3s in welche der Bügel 6 eingreift und aus dem Abstand zwischen den Rillen 3s ergibt, durch die elastische Beilagscheibe 7 so ausgeglichen dass die Scheibe 2 ohne Spiel gehaltert wird.

Durch Einsatz eines Bügels 6a mit gebogenen elastischen Schenkeln 6b welche in entsprechende (breitere) Schlitze eingeführt sind, besteht die Möglichkeit das durch den Abstand der Rillen 3u, 3v, 3s bestimmte, Spiel ohne Einsatz elastischer Beilagscheiben 7 zu eliminieren. Eine solche Möglichkeit ist aber nur illustrativ und gehör nicht zur Erfindung.

Durch Vorsehen zweier paralleler Abflachungen 3f am Schaft 3c, wodurch in den entsprechenden Bereichen die Rille 3u, 3v, 3s eliminiert werden, ist es möglich den Eingriff und/oder das Ausklinken des Schaftes 3c mit an der zu halternden Scheibe 2 anliegendem Kopf zu erreichen indem der Bolzen um ca. 90° verdreht wird. Um die Drehung des Kopfes 3b des Bolzens zu erleichtern kann dieser mit Sitzen oder Vorsprüngen für das Ansetzen von Werkzeugen versehen sein.

## Patentansprüche

1. Abstandhalter für die Befestigung von Paneelen, Scheiben (2) oder dergleichen, bestehend aus einer Buchse (3a) welche mittels Dübel an einer Wandoberfläche (1) befestigbar ist und in welche ein Bolzen des abstandhalters mit im Gebrauch eine Bohrung des Paneel, der Scheibe (2) oder dergleichen durchdringendem, axial in die Buchse (3a) eingestecktem und mit vorstehendem Kopf (3b) versehenem, Schaft (3c) eingreift, wobei der Schaft (3c) des Bolzens über die gesamte oder über einen Teil seiner Längserstreckung eine Reihe umlaufender, aneinanderliegender Rillen aufweist welche U-förmigen (3u), V-förmigen (3v), quadratischen, trapezförmigen oder Sägezahn-förmigen Querschitt (3s) haben **dadurch gekennzeichnet, dass** die Buchse (3a) zwei zueinander parallele und in der selben Ebene liegende Schlitze (3d) aufweis, welche die Wand (3a) der Buchse so durchqueren, dass die parallelen Schenkel eines elastischen Bügels (6, 6a) des abstandhalters welche in die besagten Schlitze eingesetzt sind, im Gebrauch in eine der genannten Rillen (3u, 3v, 3s) am Schaft (3c) des axial (x) in die Buchse (3a) eingesetzten Bolzens eingreifen und dass zwischen des dem Kopf (3b) des Bolzens und im Gehrauch durch den Abstandhalter gehalterten Paneels, der Scheibe (2) oder dergleichen und/oder zwischen des besagten Paneels, der Scheibe (2) oder dergleichen und der Buchse (3a) eine elastische Beilagscheibe (7) des Abstandhalters einlegbar ist, welche während der Montage komprimierbar ist, um ein eventuelles axiales Spiel zwischen Scheibe (2) und den, den Abstandhalter (3) bildenden anderen Teilen auszugleichen

2. Abstandhalter gemäß Anspruch 1, **dadurch gekennzeichnet, dass** der Bügel (6a) elastische gebogene Schenkel (6b) aufweist und die entsprechende Buchse (3a) Schlitze (3d) aufweist, welche geeignete Form und Abmaße zur Aufnahme des besagten Bügels (6a) aufweisen, um eine elastische axiale Rückholwirkung seitens der gebogenen Schenkel am Schaft (3c) des Bolzens zu erreichen, wenn in dessen Rillen (3u, 3v, 3s) die Schenkel (6a) eingreifen.

3. Abstandhalter gemäß Anspruch 1, **dadurch gekennzeichnet, dass** der Schaft (3c) des Bolzens zwei seitliche, zueinander und zur Achse des Bolzens (3c) parallele, Abflachungen (2f) aufweist, und dass in diesem Fall der Kopf (3b) des Bolzens mit Sitzen oder Vorsprüngen versehen sein kann, um das Ansetzen bekannter Werkzeuge zwecks Drehung (3r) des Bolzens zu erleichtern.

## Claims

1. Spacer for the fastening of panels, panes (2) or the like, comprising a bushing (3a) which can be fastened to a wall surface (1) by means of dowels and in which there engages a bolt of the spacer by way of a shaft (3c) which in use passes through a hole in the panel, the pane (2) or the like, is inserted axially into the bushing (3a) and is provided with a projecting head (3b), wherein the shaft (3c) of the bolt has a row of encircling, contiguous grooves over all or over part of its longitudinal extent, which grooves have a U-shaped (3u), V-shaped (3v), square, trapezoidal or sawtooth-shaped cross section (3s), **characterized in that** the bushing (3a) has two mutually parallel slots (3d) which lie in the same plane and which pass through the wall (3a) of the bushing such that the parallel legs of an elastic clip (6, 6a) of the spacer, which legs are inserted into the said slots, engage in use in one of the stated grooves (3u, 3v, 3s) on the shaft (3c) of the bolt inserted axially (x) into the bushing (3a), and **in that** an elastic shim (7) of the spacer can be placed between the head (3b) of the bolt and the panel, the pane (2) or the like, which is retained in use by the spacer, and/or between the said panel, the pane (2) or the like and the bushing (3a), which shim can be compressed during the mounting operation in order to compensate for any axial play between the pane (2) and the other parts forming the spacer (3).

2. Spacer according to Claim 1, **characterized in that** the clip (6a) has elastic bent legs (6b) and the corresponding bush (3a) has slots (3d) which have a suitable shape and dimensions for receiving the said clip (6a) in order to achieve an elastic axial restoring action on the part of the bent legs on the shaft (3c) of the bolt when the legs (6b) engage in the grooves (3u, 3v, 3s) thereof.

3. Spacer according to Claim 1, **characterized in that** the shaft (3c) of the bolt has two lateral flat portions (3f) which are parallel to one another and to the axis of the bolt, and **in that** in this case the head (3b) of the bolt can be provided with seats or projections in order to facilitate the application of known tools for the purpose of turning (3r) the bolt.

## Revendications

1. Entretoise pour la fixation de panneaux, plaques (2) ou analogues, composée d'une embase (3a) laquelle peut être fixée au moyen de cheville au niveau d'une surface de paroi (1) et dans laquelle un boulon de l'entretoise est en prise avec, en usage, une tige (3c) munie de tête (3b) saillante et insérée axialement dans l'embase (3a), traversant un orifice du panneau, de la plaque (2) ou analogue, la tige (3c) du boulon présentant sur tout ou partie de son extension longitudinale une série de rainures contiguës et circulaires, lesquelles ont une section transversale (3s) en forme de dent de scie ou trapézoïdale, carrée, en forme de V (3v), en forme de U (3u), **caractérisée en ce que** l'embase (3a) présente deux fentes (3d) parallèles l'une à l'autre et placées dans le même plan, lesquelles traversent la paroi (3a) de l'embase, de sorte que les branches parallèles d'un étrier (6, 6a) élastique de l'entretoise, lesquelles sont placées dans lesdites fentes, sont en prise, en usage, dans une des rainures (3u, 3v, 3s) citées, au niveau de la tige (3c) du boulon inséré axialement (x) dans l'embase (3a), et **en ce qu'**entre la tête (3b) du boulon et le panneau, la plaque (2) ou analogue maintenue, en usage, à travers l'entretoise, et/ou entre le panneau, la plaque (2) ou analogue en question et l'embase (3a), une plaque de calage (7) élastique de l'entretoise peut être mise en place, laquelle peut être comprimée pendant le montage, afin de compenser un éventuel jeu axial entre la plaque (2) et les autres éléments formant l'entretoise (3).

2. Entretoise selon la revendication 1, **caractérisée en ce que** l'étrier (6a) présente des branches (6b) élastiques, courbées, et **en ce que** l'embase (3a) correspondante présente des fentes (3d) lesquelles présentent des forme et dimensions appropriées pour loger ledit étrier (6a), afin d'obtenir un effet de rappel axial élastique de la part de la branche courbée au niveau de la tige (3c) du boulon, lorsque les branches (6a) sont en prise dans ses rainures (3u, 3v, 3s).

3. Entretoise selon la revendication 1, **caractérisée en ce que** la tige (3c) du boulon présente deux plats (2f) latéraux, parallèles l'un par rapport à l'autre et à l'axe du boulon (3c), et **en ce que**, dans le cas présent, la tête (3b) du boulon peut être munie de logements ou de saillies, afin de faciliter la mise en place d'outils connus pour rotation (3r) du boulon.
